# EUROPEAN PATENT APPLICATION

(11) **EP 0 578 500 A1**
(43) Date of publication of application: **12.01.1994**
(21) Application number: 93305367.0
(22) Date of filing: 08.07.1993
(51) Int. Cl.: B29B 17/00, B29B 17/02

(54) **Thermoplastic composition and method of making**

(30) Priority: 08.07.1992 US 910629
(71) Applicant: TERRA PLASTIC RECYCLING INC., Cambridge, Ontario N1R 5R5 (CA)
(72) Inventor: Seeley, Peter, Cambridge, Ontario N1R 5R5 (CA)
(74) Representative: Jones, Graham H.

(57) **Abstract**

A method of making a thermoplastic composition from waste plastics is disclosed. The composition consists of a solid matrix which includes high density thermoplastic particles (40) bonded together by a low density thermoplastic (42) which conformally coats the high density particles. The composition may be made using a low performance heated press (34) having a potential for heating a mold to about 160°C, and exerting a pressure of about 60 Kg/cm². The composition is preferably made using 100% recycled plastic, unwashed recycled engine oil containers being the preferred material for the high density component and recycled shrink wrap being the preferred material for the low density component. To make the composition the high density and low density components must be ground into particles (16) and proportionally blended in a substantially homogeneous mixture. If both the high density (40) and low density (42) components are not films having similar bulk densities, an agent for promoting an adhesion between the components must be added so that a substantially homogeneous mixture of the components can be obtained. The preferred agent for promoting that adhesion is used engine oil, preferably applied to the high density particles (16) after grinding.

## Description

The present invention relates to thermoplastics and thermoplastic compositions and, in particular to a novel thermoplastic composition manufactured from recycled thermoplastic materials using an energy efficient process for forming cohesive thermoplastic articles.

### Background Of The Invention

Thermoplastic materials have gained broad acceptance as inexpensive disposable packaging materials which are widely used in industrialized countries. Although the desirability of recycling such materials was recognized soon after the introduction of thermoplastic packaging, there exists a lack of methodology for reusing thermoplastic refuse in general, and an acute lack of methodology for reusing certain types of thermoplastic refuse.

Consequently, thermoplastic refuse is often transported to landfill sites for disposal. Increasing pressure on the capacity of landfill sites and resulting escalation of landfill tariffs have renewed interest in recycling used thermoplastics.

Although certain thermoplastics are now routinely recycled in some regions, for instance high density plastics from "clean" sources are routinely pelletised for injection or extrusion molding applications, vast quantities of used thermoplastics are not recycled because they may contain contaminants which render them unsatisfactory for reuse by conventional recycling methods and treatment to remove the contaminants renders their use uneconomic. An example of this type of thermoplastic is the one litre plastic engine oil container which is rejected for plastic pellet production for extrusion or injection molding applications because of the residual oil which contaminates those containers. Approximately 175 million one litre engine oil containers are distributed in Canada annually. Approximately ten times that number or about 1,750,000,000 engine oil containers having a one quart capacity are distributed in the United States annually. Disposal of such containers in landfill sites not only represents a waste of non-renewable resources but it also contributes to the contamination of landfill sites with the residual oil dispersed by those containers.

Another material which is routinely disposed of as landfill waste is the plastic in disposable diaper shells. The absorbent fibrous content of disposable diapers and incontinence pads is now routinely recovered and recycled. The diaper shells are, however, generally laminates of polyethylene/polypropylene thermoplastics. Because these laminates are so thin the polyethylene and the polypropylene components cannot be segregated. Diaper shells are therefore usually considered to constitute unusable waste plastic. Although no statistics are currently available, because of the number of disposable diapers/incontinence pads used daily in North America, the volume of waste plastic from this source is very considerable.

Yet another class of neglected thermoplastic waste materials includes plastic films used for shrink wrap packaging and the like. Shrink wrap packaging is widely used in bundling and protecting a wide variety of products during shipping and handling. Some 150,000 - 200,000 tons of shrink wrap packaging films are distributed annually in Canada. An estimated 15,000,000 - 20,000,000 tons are distributed annually in the United States. To date shrink wrap films have been manufactured exclusively from virgin material since film production requires a particularly pure extrusion stock. Innovative uses for discarded plastic films have heretofore not been discovered.

In the prior art, methods for reusing thermoplastic waste have generally concentrated on heating the thermoplastic to a molten state and forming articles from the molten plastic by injection molding or extrusion. Prior art documents known to relate to such processes include:

United States Patent 3,806,562 entitled PROCESS FOR THE PREPARATION OF THERMOPLASTICS MATERIAL FROM RECOVERY PLASTICS MATERIAL which issued April 23, 1974 to Lamort et al. describes a process for segregating high density and low density thermosplastic waste without presorting the waste input. In accordance with the process, unsorted thermosplastic waste is compressed into cakes having unagglomerated layers. The cakes are cut into strips that are then shredded into rods, the rods being mechanically separated into low density and high density resins suitable for molding, etc. In a preferred process, the rods are recombined in proportion of low density resins sufficient when softened to bond the high density resins to form a thin flexible sheet. The problem with the teachings of Lamort is that, in practice, it is almost impossible to achieve and maintain an homogeneous mixture of low density and high density resins. This is particularly true in the case taught by Lamort where the high density rods are thickest and heaviest while the low density rods are thinest and lightest. Experimentation has shown that the only time an adequately homogeneous mixture of untreated high density and low density resins can be obtained is when both the high density and low density components are thin films and therefore have very similar bulk densities. Otherwise, an homogeneous mixture cannot be efficiently or consistently prepared.

United States Patent 4,045,603 entitled CONSTRUCTION MATERIAL OF RECYCLED WASTE THERMOPLASTIC SYNTHETIC RESIN AND CELLULOSE FIBERS which issued to Van Smith on August 30, 1977, describes the production of a three layer building panel made from recycled waste thermoplastic and cellulose fiber aggregate wherein the outer layers of the panel contain only recycled thermoplastic and an inner layer is a mixture of thermoplastic and cellulose fiber. The panels are produced by heating recycled thermoplastic to temperatures above the melt point of the densest component and forming sheets from the melted mixture using roller presses.

United States Patent 4,968,463 entitled PROCESS FOR MAKING MOLDED OR EXTRUDED OBJECTS FROM WASTE CONTAINING PLASTIC MATERIALS issued to Lavasseur on November 6, 1990. The patent describes a process whereby unsorted waste plastics are dried, if necessary, and mixed or kneaded at a temperature of 120 to 250°C before being injection molded or extruded into useful objects.

United States Patent 5,049,330 entitled PROCESS AND APPARATUS FOR THE PRODUCTION OF PLASTIC OBJECTS issued to Rebhan on September 17, 1991. This patent describes a process and apparatus for explosively forming plastic objects from shredded objects such as recycled thermoplastic of mixed composition. Recycled thermoplastic is fed with an explosive gas mixture into a mold cavity which has a shape of an object to be formed. The gas mixture is ignited to generate sufficient heat and pressure to force the plastic to conform to the shape of the mold cavity. The temperature and pressure produced by the explosion of the gas mixture is adequate to heat the thermoplastic mixture above the melt temperature of the component plastics.

United States Patent 5,075,057 entitled MANUFACTURE OF MOLDED COMPOSITE PRODUCTS FROM SCRAP PLASTICS issued to Hoedl on December 24, 1991. This patent describes a process wherein unsorted plastic scrap is ground to a fine particle size, homogenized into a free flowing macrohomogenous powder which is preheated and blended with a filler. The thermoplastic/filler blend is then elevated to a temperature of 160°C or higher and compression molded into a product of predetermined shape.

While each process described above has its particular application, each suffers from a principle disadvantage that considerable energy is required to reduce recycled thermoplastic to a condition suitable for processing.

### Summary Of The Invention

It is a further object of the invention to provide a novel process for making articles from recycled thermoplastic material using a heated press.

It is yet a further object of the invention to provide a process for reusing waste thermoplastic contaminated with mineral oil.

It is yet another object of the invention to provide a process for reusing certain used thermoplastic films.

In accordance with an aspect of the invention there is provided a process for making articles (36) from thermoplastic material using a heated press (34), comprising a) mixing a quantity of high density thermoplastic particles (42), and a quantity of low density thermoplastic particles (40) to obtain a substantially homogeneous mixture; b) introducing at least a portion of the mixture into a mold (28); c) placing the mold (28) in the heated press (34) and operating the press (34) to heat and compress the mixture in the mold (28) until the mixture attains a temperature adequate to induce a melt flow of the low-density particles in the mixture and the pressure on the mixture causes the low density thermoplastic (42) to flow around and conformally coat the high density particles (40), thereby forming a cohesive thermoplastic article which may be cooled to a stable temperature, CHARACTERIZED IN THAT at least a one of the low density thermoplastic particles (42) and the high density thermoplastic particles (40) is coated with an agent for promoting a weak adhesion between the low density thermoplastic particles (42) and the high density thermoplastic particles (40) unless the low density (16) and the high density (16) plastic particles are respectively thin films having substantially equal bulk densities.

The present invention therefore provides a novel method of making thermoplastic compositions. In accordance with the invention, a substantially homogeneous mixture of high density and low density thermoplastic particles is compressed in a heated press to a temperature which at least equals the melt flow temperature of the low density thermoplastic particles but is not adequate to melt the high density particles. Under heat and pressure, the low density particles flow and conformally coat the high density particles. Although the high density particles are not melted, they are softened to an extent that a strong bond between the high density and the low density plastics develops. With proper annealing of the composite thus formed, a stable blemish-free thermoplastic product is produced. Annealing may be accomplished by cooling the molded composite with air or water while maintaining adequate pressure differentials to prevent warping or surface deformation due to gaseous inclusions in the hot compositions.

A substantially homogeneous mixture of high density and low density thermoplastic particles is normally unachievable because of a difference in the bulk density of the particles. The difference in bulk density causes the high density particles to settle to the bottom of a mixture while low density particles tend to migrate to the top of the mixture. The method in accordance with the invention of attaining a substantially homogeneous mixture is to introduce an agent for promoting a weak adhesion between the high density particles and the low density particles prior to or during a mixing process. It has been determined that waste mineral oil, in particular waste engine oil and/or the residual oil in recycled engine oil containers functions very satisfactorily as an agent for promoting a weak adhesion between thermoplastic particles of different bulk density, thereby facilitating a substantially homogeneous mixture.

It has also been determined that the carbon in the waste oil provides a release layer for steel molds used in the manufacturing process, thereby eliminating any requirement for mold release compounds. It has been further determined that the waste oil appears to be completely incorporated in the finished product so that even a freon test for oil residue fails to indicate the presence of residual oil. At the present time the chemistry of this effect is not well understood.

The problem of achieving a substantially homogenous mixture of high density and low density thermoplastic particles may be substantially eliminated, however, if each component in a mixture has substantially the same bulk density. If, therefore, the high density component of a mixture is derived from a thin film such as recycled diaper shells and the low density component is derived from a thin film such as shrink wrap film, the particles can be blended to achieve a substantially homogenous mixture without the use of an adhesive agent. This mixture may not be molded in steel molds without using a mold release agent, however, because the hot plastic composition will stick to the mold. It has nonetheless been determined that if raw black iron molds are used in place of steel molds, the mixture can be molded without the use of a mold release agent.

### Brief Description Of The Drawings

The invention will now be further explained by way of example only and with reference to the appended drawings wherein:
FIG. 1 is a schematic diagram of a process for manufacturing articles from thermoplastic material using a heated press; and
FIG. 2 is a schematic cross-sectional diagram of a thermoplastic composition in accordance with the invention.

### Detailed Description Of The Preferred Embodiments

The present invention provides a novel thermoplastic composition and a process for making the composition. The composition includes a high density thermoplastic component and a low density thermoplastic component. In the description which follows, "high density thermoplastics" are thermoplastics having a melt flow temperature in the 350-550°F. (177°-288°C) range and "low density thermoplastics" are thermoplastics having a melt flow temperature in the 225°-325°F. (107°-163°C) range. These particular temperature ranges have been selected for reasons explained hereinafter. The invention may be practiced with thermoplastics having melt flow temperatures which fall outside these specific temperature ranges. Both components are ground into particles and proportionately blended in a substantially homogeneous mixture before being introduced into a mold which is placed in a heated press. The press is regulated to heat to a temperature which will melt only the low density particles of the mixture, and under moderate pressure the melted low density plastic flows to form a matrix which conformally coats the high density particles, and bonds those particles in a high strength stable composition.

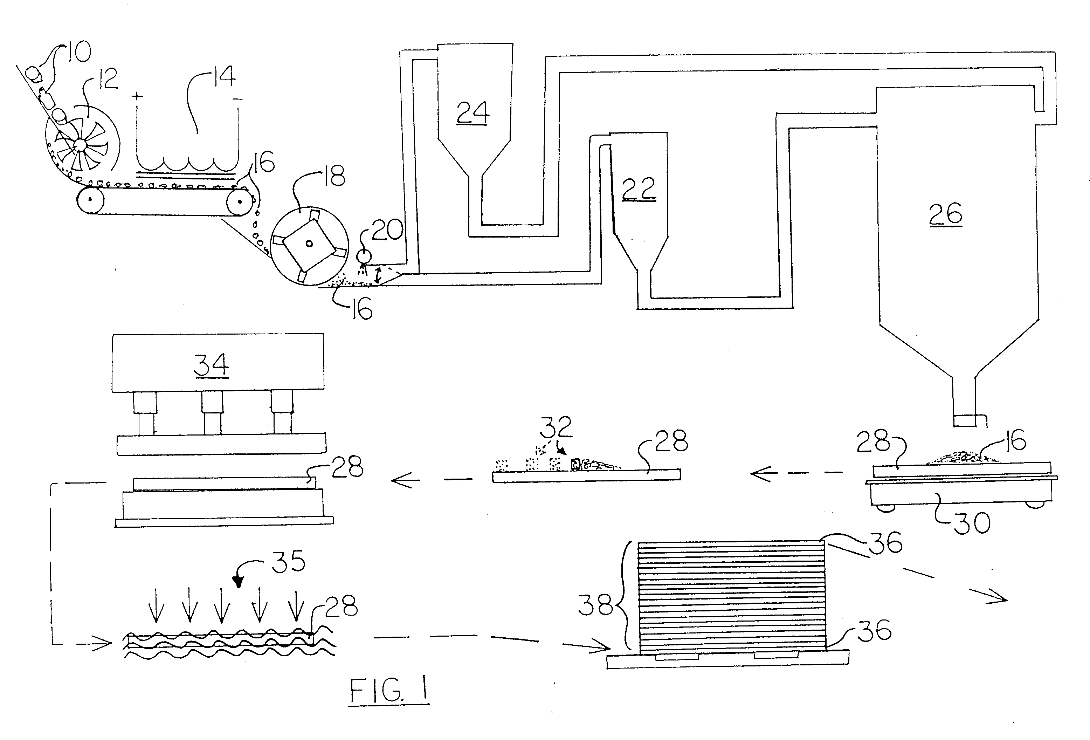

As shown in FIG. 1, a process for manufacturing articles from thermoplastic material using a heated press commences with the introduction of stock material 10 into a shredding machine 12. The stock material 10 is preferably 100 percent recycled plastic material, selected in accordance with criteria which will be explained in more detail hereinafter. Virgin thermoplastics can also be used with success.

The shredding machine 12 is preferably a fixed knife shredder but any equipment which will reduce recycled plastic to a shredded form suitable for feeding to a grinder is acceptable. After shredding, the plastic is preferably conveyed through an electromagnetic separator 14 to remove any ferrous material accidentally collected with the stock material 10. After passing through the electromagnetic separator 14 the plastic material 16 is fed into a grinder 18, preferably a hammer mill fitted with a screen having a mesh size appropriate for reducing plastic material 16 to a particle size of approximately 3/8 inches (1 cm) in diameter. If a stock material 10 is a high density thermoplastic, an agent for promoting a weak adhesion between the high density particles and low density particles is preferably introduced by a spray bar 20 after the plastic material 16 has been reduced to final particle size. As will be explained hereinafter in more detail, an adhesive agent is not required under certain circumstances when the high density component is derived from a thermoplastic film such as disposable diaper shells. It should also be noted that this step in the process is unnecessary if recycled engine oil containers are used for the high density component of stock material 10 since the oil containers contain enough residual oil to satisfy the requirement for an agent for promoting a weak adhesion between the high density and the low density particles.

After grinding the thermoplastic material 16 is directed to one of a low density particle storage container 22 and a high density particle storage container 24. This completes the materials preparation stage of the manufacturing process.

When a supply of low density thermoplastic particles have been accumulated in the storage container 22 and a supply of high density thermoplastic particles have been accumulated in the storage container 24, a batch of blended thermoplastic particles may be prepared for a production run. The thermoplastic blend is preferably prepared in a cyclone-type mixer 26. Materials from the storage container 22 for low density thermoplastic and the storage container 24 for high density thermoplastic are proportionally fed by air stream propulsion into cyclone mixer 26. The ratio of high density to low density thermoplastic will depend on the strength, flexibility and other properties desired in the finished product. Typically a mixture of approximately 20-50 percent low density thermoplastic to 50-80 percent high density thermoplastic yields an acceptable composition. As noted above, obtaining an homogeneous mix of low density and high density thermoplastic particles is normally not possible because the high density and the low density components in a mixture tend to segregate with mixing action. In order to achieve a substantially homogeneous mixture an agent which promotes a weak adhesion between the low density particles and the high density particles is required. It has been determined that unwashed recycled engine oil containers made from type 2 polyethylene contain an acceptable amount of residual oil for providing a weak adhesive effect which causes low density plastic particles to adhere to high density plastic particles. This adhesive effect permits a substantially homogeneous mixture of the particles, to permit a successful operation of the process in accordance with the invention. As explained above, if the bulk density of the high density particles and the low density particles is similar an adhesive agent is not required to achieve a substantially homogenous mixture. When both components are derived from thermoplastic films for example, an adhesive agent is not required.

The mixture achieved in the cyclone mixer 26 is preferably loaded directly into a mold 28 which rests on a balance mechanism 30 so that the mold may be charged by weight. After a predetermined quantity by weight of blended thermoplastic particles 16 is added to the mold 28, the material in the mold is distributed by a levelling process 32 which may be a manual or a mechanized operation in accordance with a variety of techniques well known in the art. After levelling a closure (not illustrated) for mold 28 is positioned on the mold 28 and the mold is moved to a heated low performance hydraulic press 34. The press 34 is preferably a hot platen press which can deliver up to 350 lb/in² (62.6 Kg/cm²) of pressure while heating the mold 28 to a temperature of 300°-350°F (149°-177°C.). Such presses are commonly known in the art. They are generally heated by a circulation of superheated steam or specifically formulated heating oils.

One product produced by the process described above are large panels of 4' x 10' (1.33 x 3.33 m.) to 5' x 10' (1.66 x 3.33 m.) having a thickness of 1/4'' to 3/4'' (.82-2.0 cm.). In order to manufacture the composition in accordance with the invention the plastic in the mold must be heated to a temperature that causes the low density plastic particles to reach melt flow temperatures. Low density plastics having a melt range of 225°-325°F. (107°C-163°C) are preferred. Using a low performance press described above, the thermoplastic in the mold reaches 250 to 300°F. in four to eight minutes, depending on the thickness of the panel. Under a pressure of 350 lb./in² melted low density thermoplastic flows to conformally coat the high density thermoplastic particles. Low density plastic also migrates to the surface of the panels to provide a smooth skin for the panel. Although the high density plastics will not reach flow viscosities until the material has been heated to the 400°-450°F. (204°-232°C) range, well above the platen press temperatures, the high density plastics soften adequately to effect permanent bonding between the low density and the high density components of the matrix.

The press cycle for a composition may be established by experimentation or, alternatively, temperature sensors may be used to measure the actual core temperature of the thermoplastic material in a mold. Once the core temperature has exceeded the melt temperature of the low density plastic in the mixture, the mold may be removed from the hydraulic press 34.

After removal from hydraulic press 34 the mold 28 must be cooled under pressure to anneal the plastic panels before the panels are unmolded. During the cooling process, generally indicated by reference 35, a distributed pressure of at least 80 lbs/ft² (327 Kg/m²) must be maintained on the mold to prevent warping and distortion of the panel. Cooling may be accomplished by either of a water cooling process or an air cooling process. Water cooling is preferred because it is much faster than air cooling. To prevent warping and distortion it is only necessary to reduce the core temperature of a panel to about 175°F (79.5°C). In a cold water bath cooling to 175°F is accomplished in about the same time as a press cycle. Therefore, if water cooling is used annealing does not create a bottle neck in the manufacturing process. Once the core temperature of a panel is reduced to 175°F, the panel may be unmolded and stacked for further cooling. In order to ensure a flat panel it is preferable that some pressure is maintained on the panel until it has reached ambient temperatures. This is conveniently accomplished by adding unmolded hot panels 36 to the bottom of a stack 38. An unmolded panel 36 will reach ambient temperature in about 24 to 36 hours.

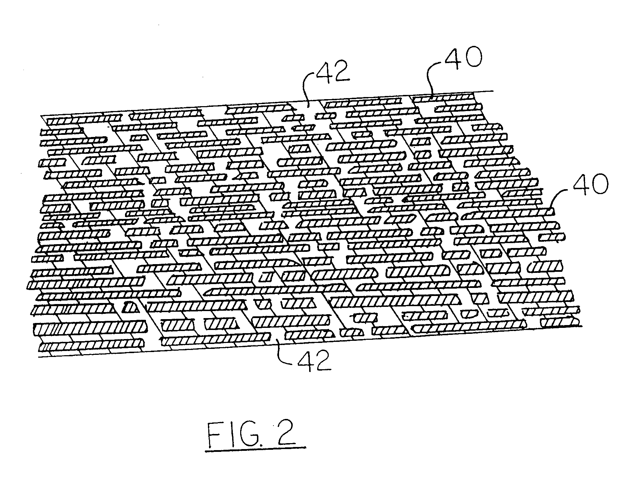

FIG 2 shows a schematic cross-sectional diagram of the composition in accordance with the invention. The composition includes high density plastic particles 40 which are embedded in a matrix of low density plastic 42. As noted above, in order to practice the invention with a preferred low performance press, high density thermoplastic is selected from those plastics having a melt flow range of 350°-550°F. (nominal 450°F or 232°C) and low density plastics are selected from those plastics having melt flow range of 225-325°F. (nominal 275°F or 135°C.). Using presses having different temperature or pressure potentials, thermoplastics having different melt flow ranges could yield desired results.

In view of the melt flow range that is desired, high density polyethylene is the preferred high density thermoplastic. Other thermoplastics having a similar melt flow range are equally acceptable. The preferred sources of recycled high density plastic are unwashed recycled engine oil containers and disposable diaper shells. The engine oil containers may include labels and cap liners made from cellulose fibers or the like. In moderate quantities such fibers do not interfere with the practice of the invention and can actually lend strength to the finished product. In fact, fibrous waste and especially cellulosic fibrous waste such as shredded paper, cardboard, wood chips and the like may be advantageously added to the thermoplastic blend to increase the tensile strength of the finished product. If fibrous particles are added to the thermoplastic mixture the quantity of low density thermosplastic particles in the mixture must be adjusted, if necessary, so that both the high density thermoplastic particles and the fibrous particles in the mixture are conformally coated by the low density thermoplastic during the compression molding cycle of the process.

The low density plastics in accordance with the invention are preferably polyethylene films. A material readily available in large quantity is recycled shrink wraps. Other thermoplastics including certain polystyrenes have also proven to be satisfactory low density stock materials.

If only dry or "clean" recycled plastic stock materials 10 (see FIG. 1) are available, an agent for promoting an adhesion between the low density and the high density thermoplastic components must be introduced unless the two components have a similar bulk density. The agent is preferably introduced using a spray bar 20 (see FIG. 1) which is preferably positioned immediately after grinder 18. The adhesive agent of preference is used engine oil, commonly available in abundant quantities. It is assumed that recycled vegatable oils would also be effective in this application although this assumption has not yet been verified through testing.

It is interesting to note that mineral oil used as an adhesive agent acts a mold release agent but aside from that beneficial effect, the presence of mineral oil in the finished product is undetectable. Testing for the presence of mineral oil in the finished plastic matrix has produced negative results. Although the chemistry of the process is not yet understood it is assumed that the mineral oil is grafted to the thermoplastic polymer chains while the plastic composition is under heat and pressure in the press.

In the instance where clean plastics can be blended without the use of an adhesive agent, disposable diaper shells and shrink wrap films for example, a mold release agent must be used or, alternatively, raw black iron molds must be used. It has been determined that molds made of raw black iron will release molded thermoplastics in accordance with the invention without the presence of a mold release agent.

### Industrial Applicability

The plastic composition in accordance with the invention is useful for manufacturing a wide variety of industrial and commercial products, especially products which can be assembled or tooled from flat sheet material.

Among the products successfully tested to date are material handling pallets and shipping containers, including knock-down reusable shipping containers. Other successful applications include animal husbandry floor and pen systems for agricultural use. Floor and pen systems for animal husbandry are particularly useful because animals prefer the insulating qualities of the thermoplastic as a sleeping surface but they do not tend to destroy the plastic by chewing it, a common problem with wooden systems in the same environment.

By varying the proportions of high and low density thermoplastics, compositions with a range of strength/flexure properties can be produced for different applications. The composition in accordance with the invention can therefore be used to manufacture any number of products, the possibilities being limited only by innovative application of the principles described above.

The invention is also useful because it provides a constructive and profitable method of recycling thermoplastic materials which were heretofore considered to be unusable waste.

It is apparent from the foregoing that a novel thermoplastic composition and a novel process for making articles using recycled thermoplastics has been disclosed. Changes and modifications in the specifically described embodiments can be carried out without departing from the scope of the invention which is intended to be limited only by the scope of the appended claims.

## Claims

1. A process for making articles (36) from thermoplastic material using a heated press (34), comprising a) mixing a quantity of high density thermoplastic particles (42), and a quantity of low density thermoplastic particles (40) to obtain a substantially homogeneous mixture; b) introducing at least a portion of the mixture into a mold (28); c) placing the mold (28) in the heated press (34) and operating the press (34) to heat and compress the mixture in the mold (28) until the mixture attains a temperature adequate to induce a melt flow of the low-density particles in the mixture and the pressure on the mixture causes the low density thermoplastic (42) to flow around and conformally coat the high density particles (40), thereby forming a cohesive thermoplastic article which may be cooled to a stable temperature, CHARACTERIZED IN THAT at least a one of the low density thermoplastic particles (42) and the high density thermoplastic particles (40) is coated with an agent for promoting a weak adhesion between the low density thermoplastic particles (42) and the high density thermoplastic particles (40) unless the low density and the high density thermoplastic particles are respectively thin films having substantially equal bulk densities.

2. The process as claimed in claim 1 further comprising a step of annealing the articles (36) after the articles (36) are removed from the press (34) by cooling the articles (36) under pressure until a core temperature of the articles (36) is reduced to a point where the structure of the articles (36) is substantially stabilized.

3. The process as claimed in claim 2 wherein the article (36) is cooled under a pressure of at least 325 Kg/m².

4. The process as claimed in claims 2 or 3 wherein the article (36) is cooled under pressure until the core temperature is reduced to at least 80°C.

5. The process as claimed in claims 1, 2, 3 or 4 wherein the agent for promoting a weak adhesion between the low density thermoplastic particles (40) and the high density thermoplastic particles (42) comprises a mineral oil.

6. The process as claimed in any preceding claim wherein the low density thermoplastic particles (40) are selected from thermoplastics having a melt flow temperature in the range of 107°-163°C. and the high density particles (42) are selected from thermoplastics having a melt flow temperature in the range of 177°- 288°C.

7. The process as claimed in any preceding claim wherein the agent for promoting a weak adhesion is supplied by using unwashed recycled engine oil containers, the residual oil in the containers providing the agent.

8. A thermoplastic composition, comprising a first component which consists of high-density thermoplastic particles (42); a second component which consists of a low-density thermoplastic matrix (40) that conformally coats the high-density thermoplastic particles (42); the first and second components (42, 40) forming a substantially solid cohesive composite at temperatures below the melt temperature of the second component (40), CHARACTERIZED IN THAT the thermoplastic composition is made by the process claimed in claim 1.

9. The thermoplastic composition as claimed in claim 8 wherein the first component (42) has a melt temperature in the range of 177°-288°C. and the second component (40) has a melt temperature in the range of 107°-163°C.

10. The thermoplastic composition as claimed in claims 8 or 9 wherein the first component (42) is provided from stock material comprising used diaper shells manufactured from high-density polyethylene/high density polypropylene laminated film and the low density component (40) is provided from stock material comprising used shrink wrap polyethylene film.

11. The thermoplastic composition as claimed in claims 8 or 9 wherein the high-density thermoplastic component (42) is provided from stock material comprising unwashed recycled engine oil containers manufactured from high-density polyethylene.

12. The thermoplastic composition as claimed in claims 8, 9 or 11 wherein the second component (40) is provided from stock material comprising recycled shrink wrap polythylene films.

13. The thermoplastic composition as claimed in claim 8, 9, 10, 11 or 12 wherein the first component (42) comprises 50-80 percent of the composition and the second component (40) comprises 20-50 percent of the composition.
